(19) Europäisches Patentamt
European Patent Office
Office européen des brevets

(11) EP 3 821 701 A1

(12) EUROPEAN PATENT APPLICATION
published in accordance with Art. 153(4) EPC

(43) Date of publication:
19.05.2021 Bulletin 2021/20

(51) Int Cl.:
A01G 24/15 (2018.01)      A01G 24/20 (2018.01)
A01G 24/30 (2018.01)

(21) Application number: 19833339.5

(22) Date of filing: 11.07.2019

(86) International application number:
PCT/JP2019/027542

(87) International publication number:
WO 2020/013286 (16.01.2020 Gazette 2020/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 12.07.2018   JP 2018132297

(71) Applicant: Kuraray Co., Ltd.
Kurashiki-shi, Okayama 710-0801 (JP)

(72) Inventors:
• INADA, Shinya
  Osaka-shi, Osaka 530-8611 (JP)
• ONISHI, Hideki
  Osaka-shi, Osaka 530-8611 (JP)
• OHMORI, Kei
  Okayama-shi, Okayama 702-8601 (JP)
• ARIHARA, Ryoichi
  Okayama-shi, Okayama 702-8601 (JP)
• FUJII, Kazunori
  Akaiwa-shi, Okayama 709-0892 (JP)
• YOSHIKATA, Mami
  Akaiwa-shi, Okayama 709-0892 (JP)

(74) Representative: Müller-Boré & Partner
Patentanwälte PartG mbB
Friedenheimer Brücke 21
80639 München (DE)

(54) **WATER-ABSORBING CULTURE SOIL**

(57) A water-absorbing culture soil comprising a water-repellent organic material, a clay mineral and a polyvinyl alcohol, wherein at least a part of the clay mineral is adhered to the water-repellent organic material through the polyvinyl alcohol, and the desorption ratio after watering is 10% by mass or less.

EP 3 821 701 A1

**Description**

TECHNICAL FIELD

The present invention relates to: a water-absorbing culture soil which can be used as a nursery soil for agricultural or horticultural use or the like; a method for producing the water-absorbing culture soil; and a composition for water-absorbing culture soils.

BACKGROUND ART

As a nursery soil for agricultural or horticultural use, a water-absorbing culture soil comprising a water-repellent organic material (e.g., peat moss), a clay mineral and a surfactant is known. In the water-absorbing culture soil of this type, although the water repellency of the water-repellent organic material in a dried state can be suppressed by the action of the surfactant, there is still a problem that the water absorbability may be significantly decreased due to the deterioration in water repellence-preventing performance of the surfactant during storage.
It has been also studied on a water-absorbing culture soil which comprises, in place of a surfactant, a binder containing a water-soluble polymeric material (see, for example, Patent Document 1).

PRIOR ART DOCUMENT

PATENT DOCUMENT

Patent Document 1: JP-A-2005-341898

SUMMARY OF THE INVENTION

PROBLEMS TO BE SOLVED BY THE INVENTION

In the technique disclosed in Patent Document 1, however, the dissolution of the binder component in water is sometimes insufficient. As a result, the binder cannot adhere evenly to the entire of the water-repellent organic material and, therefore, the clay mineral is desorbed (fell off) from the water-repellent organic material by subsequent watering, often resulting in the deterioration in performance. Consequently, it is found that satisfactory water absorbability may not be retained for a long period.
In these situations, an object of the present invention is to provide: a water-absorbing culture soil which can retain excellent water absorbability even when watering is applied repeatedly; a method for producing the water-absorbing culture soil; and a composition for water-absorbing culture soils.

SOLUTIONS TO THE PROBLEMS

For the purpose of solving the above-mentioned problems, the present inventors have made extensive and intensive studies. As a result, it is found that the problem can be solved by a water-absorbing culture soil in which at least a part of a clay mineral adheres to a water-repellent organic material through a polyvinyl alcohol and in which the desorption (falling-off) ratio after watering is 10% by mass or less. This finding leads to the accomplishment of the present invention. The present invention includes the following aspects.

[1] A water-absorbing culture soil comprising a water-repellent organic material, a clay mineral and a polyvinyl alcohol, wherein at least a part of the clay mineral is adhered to the water-repellent organic material through the polyvinyl alcohol, and the desorption ratio after watering is 10% by mass or less.
[2] The water-absorbing culture soil according to [1], wherein the content of the polyvinyl alcohol is 0.7 to 20 parts by mass per 100 parts by mass of the water-repellent organic material.
[3] The water-absorbing culture soil according to [1] or [2], wherein the content of the clay mineral is 10 to 100 parts by mass per 100 parts by mass of the water-repellent organic material.
[4] The water-absorbing culture soil according to any one of [1] to [3], wherein the water-absorbing culture soil is a shaped article that is shaped into a specified shape.
[5] A composition for water-absorbing culture soils, comprising a water-repellent organic material, a clay mineral, and polyvinyl alcohol fibers having an average fiber diameter of 100 $\mu$m or less and having an aspect ratio of 30 to 1500, wherein the content of the polyvinyl alcohol fibers is 0.7 to 20 parts by mass per 100 parts by mass of the water-repellent organic material.

[6] A method for producing a water-absorbing culture soil, comprising the steps of: mixing water with a composition for water-absorbing culture soils as recited in [5] to produce a mixture; and drying the mixture.

[7] A method for producing a water-absorbing culture soil, comprising the steps of: filling a composition for water-absorbing culture soils as recited in [5] into a container having a specified shape; mixing water with the composition to produce a mixture; and drying the mixture.

EFFECTS OF THE INVENTION

The water-absorbing culture soil of the present invention can retain excellent water absorbability even when watering is applied repeatedly.

EMBODIMENTS OF THE INVENTION

[Water-absorbing culture soil]

The water-absorbing culture soil of the present invention comprises a water-repellent organic material, a clay mineral and a polyvinyl alcohol, wherein at least a part of the clay mineral is adhered to the water-repellent organic material through the polyvinyl alcohol and the desorption ratio after watering is 10% by mass or less.
The desorption ratio after watering can be determined and calculated in the following manner.
A 10-mesh woven wire [wire diameter: 0.6 mm, opening size: 1.9 mm, open area: 58% (i.e., the ratio of the areas of open space parts to the sum total of the areas of wire mesh parts and the areas of the open space parts)] that is cut into a size of 120 mm × 120 mm is placed on a 500-cc beaker having an outer diameter of about 90 mm, then a water-absorbing culture soil (5 g) is spread evenly on the woven wire in such a manner that the water-absorbing culture soil can fit inside of an opening of the beaker, then water (200 cc) is poured slowly so as to penetrate throughout the water-absorbing culture soil, and then a filtrate is received by the beaker. Subsequently, floating matters (a water-repellent organic material) in the filtrate is removed, then precipitates (a clay mineral) in the filtrate are collected by filtration, and then the collected precipitates are dried for 1 hour in a drying machine set to 105°C and are then precisely weighed to measure the amount of the precipitates (also sometimes referred to as "desorbed precipitates", hereinafter). Subsequently, a desorption ratio after watering is calculated in accordance with the following equation (1).

$$\text{Desorption ratio (\% by mass)} = (\text{amount of desorbed precipitates})/5 \text{ g} \times 100 \text{ (1)}$$

Among the clay mineral contained in the water-absorbing culture soil, the clay mineral which is adhered to the water-repellent organic material remains on the woven wire even after water is poured over the water-absorbing culture soil, while the clay mineral which is desorbed from the water-repellent organic material is collected as desorbed precipitates in a filtrate. Accordingly, a smaller desorption ratio means that the amount of the clay mineral adhered to the water-repellent organic material after watering is larger.
In the water-absorbing culture soil of the present invention, the desorption ratio after watering is 10% by mass or less. Therefore, even when watering is applied to the water-absorbing culture soil, a large amount of the clay mineral can remain adhered to the water-repellent organic material. As a result, even when watering is applied repeatedly, excellent water absorbability can be retained. The water absorbability can be retained more effectively with the decrease in the desorption ratio after watering. The desorption ratio after watering is preferably 8% by mass or less, more preferably 5% by mass or less, still more preferably 3% by mass or less, particularly preferably 2% by mass or less. The lower limit of the desorption ratio after watering is generally 0% by mass or more. The water absorbability can be evaluated by, for example, a water absorption rate or an amount of absorbed water. The water-absorbing culture soil of the present invention can retain the water absorption rate and the amount of absorbed water thereof even when watering is applied repeatedly.
It is assumed that the reason why the water-absorbing culture soil of the present invention has an excellent water absorbability-retaining capability is because the polyvinyl alcohol contained in the water-absorbing culture soil evenly coats the water-repellent organic material over the entire of the water-absorbing culture soil so that the clay mineral can adhere (or can be coated) to the water-repellent organic material evenly and stably through the polyvinyl alcohol. Therefore, the water-absorbing culture soil of the present invention can retain excellent water absorbability for a long period even when the amount of the polyvinyl alcohol that serves as a binder is relatively small. When the water-absorbing culture soil of the present invention is used, water can penetrate throughout the culture soil for a long period without inhibiting the growth of a plant and, as a result, water can be supplied to a plant effectively, which leads to the reduction in cost and the improvement in workability.

In the water-absorbing culture soil of the present invention, the clay mineral is dispersed evenly therein. Therefore, the water-absorbing culture soil has an excellent water absorption rate. In the present invention, the water absorption rate is preferably 10 seconds or less, more preferably 5 seconds or less, still more preferably 3 seconds or less, particularly preferably 1 second or less. The lower limit of the water absorption rate is 0 seconds or more. The term "water absorption rate" refers to a time from when 3 cc of water is dripped on 5 g of the dried water-absorbing culture soil under the conditions of a temperature of 20°C and a humidity of 65% until when water droplets are absorbed in the culture soil. More specifically, the "water absorption rate" refers to a time from when water is dripped until when dripped water droplets are lost the drop-like shapes thereof and are spread over the soil.

The form of the water-absorbing culture soil of the present invention is not particularly limited, and may be in the form of a shaped article that is shaped in a specific shape. The form of the shaped article (also referred to as "solidified culture soil", hereinafter) may be selected appropriately depending on the intended use. In general, the solidified culture soil is produced in a container having a specific shape, as mentioned below. It is possible to plant seeds of a plant such as a vegetable, a grass or flower, a fruit tree, a tree or the like in the solidified culture soil in the container, then grow the seeds for a predetermined period, then remove the solidified culture soil together with root balls, and then plant the solidified culture soil and the root balls in a green area such as a park, a plowland or the like manually or mechanically.

<Water-repellent organic material>

The water-repellent organic material to be contained in the water-absorbing culture soil of the present invention may be selected appropriately depending on the types of the plant to be grown or the like. Examples of the water-repellent organic material include peat moss, composted bark, lignite, rice husks, rice husk charcoal, charcoal dust, coconut dust (e.g., husk dust, coir dust, coco chips) and sawdust. These water-repellent organic materials may be used singly, or two or more of them may be used in combination. Among these materials, it is preferred to use at least peat moss, from the viewpoint of satisfactory water absorbability, gas permeability, handleability and the like. As the water-repellent organic material, a commercially available product may also be used appropriately.

<Clay mineral>

The clay mineral to be contained in the water-absorbing culture soil of the present invention may be selected appropriately depending on the types of the plant to be grown. Examples of the clay mineral include: a so-called "soil" (natural soil) including heavy clay soil, potting soil, clay loam, loam, red ball earth, Kanuma pumice and volcanic ash; and an inorganic material including perlite, vermiculite, rock wool, zeolite, bentonite and kaolinite. Among these materials, it is preferred to use at least volcanic ash, from the viewpoint that water absorbability can be improved easily. These clay minerals may be used singly, or two or more of them may be used in combination. As the clay mineral, a commercially available product may also be used appropriately.

The clay mineral may have, for example, a granular form or a powdery form. The particle diameter of the clay mineral is preferably 0.01 to 5 mm, more preferably 0.1 to 4 mm. When the particle diameter of the clay mineral falls within the above-mentioned range, the clay mineral can adhere (or can be coated) to the water-repellent organic material through a binder easily, and the water absorption rate or water absorbability-retaining capability of the clay mineral can be improved. The term "water absorbability-retaining capability" as used herein refers to a property that water absorbability can be retained even when watering is applied repeatedly.

The content of the clay mineral is preferably 10 parts by mass or more, more preferably 15 parts by mass or more, still more preferably 20 parts by mass or more, and is preferably 100 parts by mass or less, more preferably 80 parts by mass or less, still more preferably 60 parts by mass or less, particularly preferably less than 50 parts by mass, most preferably 48 parts by mass or less, per 100 parts by mass of the water-repellent organic material, or may be a combination of any one of these upper limits and any one of the lower limits. The content of the clay mineral which is equal to or more than the above-mentioned lower limit is preferred, because the water absorbability or water absorbability-retaining capability of the water-absorbing culture soil can be improved easily; while the content of the clay mineral which is equal to or lower than the above-mentioned upper limit is preferred, because water absorbability that is a characteristic property of the organic material cannot be deteriorated.

<Polyvinyl alcohol>

The polyvinyl alcohol to be contained in the water-absorbing culture soil of the present invention has a function of a binder for adhere (or apply) the clay mineral to the water-repellent organic material.

A polyvinyl alcohol is a polymer mainly having a constituent unit derived from vinyl alcohol and a constituent unit derived from a vinyl ester (preferably vinyl acetate). The polyvinyl alcohol may contain a monomer-derived constituent unit other than these constituent units, as long as the effects of the present invention cannot be impaired. Examples of the monomer for forming the monomer-derived constituent unit (wherein the monomer also referred to as "other monomer", hereinafter) include ethylene, allyl alcohol, itaconic acid, acrylic acid, maleic anhydride and ring-opened products thereof, vinylpyrrolidone and arylsulfonic acid and entirely or partially neutralized products thereof. These other monomers may be used singly, or two or more of them may be used in combination. The content of the constituent unit derived from the other monomer is generally 20 mol% or less, preferably 10 mol% or less, more preferably 5 mol% or less, based on the total number of moles of the constituent units that constitute the polyvinyl alcohol.

The polyvinyl alcohol can be produced by a method in which a resin produced by polymerizing a vinyl ester (preferably vinyl acetate) and optionally the above-mentioned other monomer is saponified by a known technique, such as a technique in which the saponification is carried out while dissolving the resin in a solvent such as an alcohol. An example of the solvent to be used in the method is a lower alcohol such as methanol and ethanol. The alcohol to be used in the saponification reaction may additionally contain a solvent such as acetone, methyl acetate, ethyl acetate and benzene, as long as the content of the alcohol is 40% by mass or less. Examples of the catalyst to be used in the saponification reaction include: a hydroxide of an alkali metal, such as potassium hydroxide and sodium hydroxide; an alkali catalyst such as sodium methoxide; and an acid catalyst such as mineral acid. The temperature for the saponification reaction is not particularly limited, and is preferably within the range from 20 to 60°C. The polyvinyl alcohol produced by the saponification reaction is washed and is then subjected to drying.

The saponification degree of the polyvinyl alcohol is preferably 60 mol% or more, more preferably 80 mol% or more, still more preferably 85 mol% or more, and is preferably 99 mol% or less, more preferably 98 mol% or less, still more preferably 96 mol% or less. The range of the saponification degree may be a combination of any one of the above-mentioned upper limits and any one of the above-mentioned lower limits. When the saponification degree falls within the above-mentioned range, the polyvinyl alcohol can be dissolved in water easily during the production process and, therefore, the water absorbability-retaining capability of the finished water-absorbing culture soil can be improved easily. The saponification degree of the polyvinyl alcohol can be measured in accordance with JIS-K6726.

The average polymerization degree (viscosity average polymerization degree) of the polyvinyl alcohol is preferably 300 to 4000, more preferably 500 to 3000, still more preferably 800 to 2400. When the average polymerization degree of the polyvinyl alcohol is equal to or more than the above-mentioned lower limit, the strength can be improved easily. When the average polymerization degree of the polyvinyl alcohol is equal to or less than the above-mentioned upper limit, on the other hand, the solubility in water can be improved. The average polymerization degree of the polyvinyl alcohol can be measured in accordance with JIS-K6726.

The form of the polyvinyl alcohol is preferably a fibrous form. A fibrous polyvinyl alcohol (also referred to as "polyvinyl alcohol fibers", hereinafter) can be produced by, for example, spinning a polyvinyl alcohol resin by a conventional method. When the polyvinyl alcohol has a fibrous form, the polyvinyl alcohol can be dispersed evenly in the culture soil without being unevenly distributed in the culture soil. Therefore, it becomes possible to adhere (or coat) the clay mineral to the water-repellent organic material evenly over the entire of the water-absorbing culture soil. When the polyvinyl alcohol fibers are used as the polyvinyl alcohol and the content, average fiber diameter, average fiber length, aspect ratio or the like of the polyvinyl alcohol fibers is controlled, the desorption ratio after watering can be adjusted to 10% by mass or less. The desorption ratio after watering tends to decrease with the increase in the content of the polyvinyl alcohol fibers.

The average fiber diameter of the polyvinyl alcohol fibers is preferably 100 $\mu$m or less, more preferably 50 $\mu$m or less, still more preferably 30 $\mu$m or less, particularly preferably 20 $\mu$m or less. The lower limit of the average fiber diameter is preferably 5 $\mu$m or more, more preferably 10 $\mu$m or more. When the average fiber diameter of the polyvinyl alcohol fibers is equal to or more than the above-mentioned lower limit, there is an advantage in producibility. When the average fiber diameter of the polyvinyl alcohol fibers is equal to or less than the above-mentioned upper limit, the polyvinyl alcohol fibers can be dispersed evenly in the water-absorbing culture soil easily. As a result, the desorption ratio after watering can be further reduced and the water absorbability-retaining capability can also be improved easily. The average fiber diameter can be calculated by observing the side surfaces of 20 fibers with a microscope, then measuring the fiber diameters of the fibers separately, and then averaging the fiber diameters.

The average fiber length of the polyvinyl alcohol fibers is preferably 0.1 to 30 mm, more preferably 0.5 to 10 mm, still more preferably 1 to 5 mm. The ratio of the average fiber length of the polyvinyl alcohol fibers to the average fiber diameter of the polyvinyl alcohol fibers (i.e., aspect ratio) is preferably 30 to 1500, more preferably 40 to 1000, still more preferably 50 to 800, particularly preferably 60 to 300. When the average fiber length or aspect ratio of the polyvinyl alcohol fibers is equal to or more than the above-mentioned lower limit, there is an advantage in producibility. When the average fiber length or aspect ratio of the polyvinyl alcohol fibers is equal to or less than the above-mentioned upper limit, the polyvinyl alcohol fibers can be dispersed evenly in the water-absorbing culture soil easily. As a result, the desorption ratio after watering can be further reduced, and the water absorbability-retaining capability can be improved easily. The average fiber length can be measured in accordance with JIS L1015.

It is advantageous that the polyvinyl alcohol fibers can be dissolved in water easily in the below-mentioned production process. Therefore, the polyvinyl alcohol fibers are preferably water-soluble polyvinyl alcohol fibers. The term "water-soluble polyvinyl alcohol fibers" refers to polyvinyl alcohol fibers which can be dissolved in water at 100°C or lower, preferably 60°C or lower, more preferably 40°C or lower.

The components, the saponification degree and the polymerization degree of the polyvinyl alcohol fibers may be the same as those of the polyvinyl alcohol or may be selected from the ranges as mentioned for the polyvinyl alcohol.

The polyvinyl alcohol fibers are produced by spinning a polyvinyl alcohol resin by a conventional method. For example, a spinning dope prepared by dissolving the polyvinyl alcohol in a solvent may be ejected into a coagulation solution capable of coagulating the dope. Particularly in the case where the spinning dope is to be ejected through a plurality of holes, it is preferred to employ a wet spinning method rather than a dry-wet spinning method, from the viewpoint of preventing the sticking between fibers upon the ejection. A wet spinning method is a method in which the spinning dope is ejected directly through a spinneret into a coagulation bath. A dry-wet spinning method is a method in which the spinning dope is ejected through a spinneret temporality into air or an inert gas and is then introduced into a coagulation bath.

As a dope solvent, dimethyl sulfoxide (abbreviated as "DMSO", hereinafter), glycerin, ethylene glycol, water, a concentration aqueous solution of zinc chloride or a rhodan salt, a mixed solvent composed of two or more of these solvents, or the like can be used. The dope solvent is preferably DMSO, glycerin, ethylene glycol, or water, still more preferably DMSO or water. The polyvinyl alcohol may be dissolved in the solvent by a conventional method. From the viewpoint of preventing the occurrence of oxidization, decomposition or a crosslinking reaction or preventing the occurrence of foaming, it is preferred to dissolve the polyvinyl alcohol in the solvent by agitation in a nitrogen atmosphere or under a reduced pressure.

The spinning dope thus prepared is introduced into a coagulation bath capable of coagulating the dope to form fibers. The coagulation bath to be used in the present invention varies between the case where the dope solvent is an organic solvent and the case where the dope solvent is an aqueous solution. In the case of a dope prepared using an organic solvent, from the viewpoint of the strength of obtained fibers and the like, a mixed solution composed of a coagulation solvent and the dope solvent is preferred. The coagulation solvent is preferably an organic solvent capable of coagulating the polyvinyl alcohol, such as an alcohol (e.g., methanol, ethanol), a ketone (e.g., acetone, methyl ethyl ketone) or the like, particularly preferably an organic solvent composed of methanol and DMSO, and is preferably a mixed solution having a (coagulation solvent)/(dope solvent) ratio of 25/75 to 95/5 by mass, 55/45 to 80/20 by mass, from the viewpoint of the processability and the collection of solvents. The temperature of the coagulation bath is preferably 30°C or lower. Particularly for achieving uniform cooling/gelatinization, the temperature is preferably 20°C or lower, more preferably 15°C or lower.

On the other hand, in the case where the spinning dope is an aqueous solution, a preferred example of the coagulation solvent constituting the coagulation solution is an aqueous solution of an inorganic salt which is capable of coagulating the polyvinyl alcohol, such as sodium sulfate, sodium chloride and sodium carbonate. As a matter of course, the coagulation bath may be acidic or alkaline.

A coagulated thread thus produced is drawn in a wet mode by 2 to 6 folds in the coagulation bath. In the wet drawing bath, the dope solvent may be contained. For preventing the occurrence of agglutination between threads, it is critical to increase the wet drawing ratio as long as fluffing does not occur. Therefore, it is effective to increase the temperature of the wet drawing bath to a temperature around a boiling point. Subsequently, the wet-drawn thread is brought into contact with the coagulation solvent, and then the dope solvent is removed from the thread by extraction. The extraction is generally carried out by allowing the thread to pass through a plurality of extraction baths. As the extraction bath, the coagulation solvent alone or a mixed solution composed of the coagulation solvent and the dope solvent can be used. As the temperature of the extraction bath, a temperature ranging from 0 to 50°C is employed.

Subsequently, the thread that has been undergone the extraction of the dope solvent is dried. The drying temperature is preferably 210°C or lower. It is particularly preferred to employ a multi-stage drying process in which the drying is carried out at a lower temperature of 160°C or lower in an initial stage of the drying process and the drying is then carried out at a higher temperature in a later stage of the drying process. From the viewpoint of the prevention of the occurrence of agglutination, an oily agent may be adhered to the thread before the drying or the thread may be shrunk in order to relax the shrinkage stress upon the drying.

If necessary, the dried raw thread may be subjected to a dry heat drawing and/or a dry heat treatment (including dry heat shrinkage). The temperature for the dry heat drawing and/or the dry heat treatment is preferably about 150 to 250°C. With respect to the production of the polyvinyl alcohol fibers, reference to, for example, JP-A-7-42019 may be made. Alternatively, as the polyvinyl alcohol fibers, a commercially available product may be used.

The polyvinyl alcohol to be used in the present invention can be dispersed evenly in the water-absorbing culture soil. Therefore, the polyvinyl alcohol can exhibit the water absorbability-retaining capability thereof even when being contained at a small content. The content of the polyvinyl alcohol in the water-absorbing culture soil is preferably 0.7 parts by mass or more, more preferably 1 part by mass or more, still more preferably 3 parts by mass or more, particularly preferably 5 parts by mass or more, and is preferably 20 parts by mass or less, more preferably 15 parts by mass or less, per 100 parts by mass of the water-repellent organic material. The range of the content may be a combination of any one of these upper limits and any one of these lower limits. When the content of the polyvinyl alcohol is equal to or more than the above-mentioned lower limit, the water absorbability-retaining capability of the water-absorbing culture soil can be improved more easily. When the content of the polyvinyl alcohol is equal to or less than the above-mentioned upper limit, the dispersibility of the fibers can become good.

The water-absorbing culture soil of the present invention may optionally contain other component, such as a wetting agent (e.g., a polyethylene glycol-type wetting agent) and a fertilizer (e.g., an inorganic fertilizer, an organic fertilizer, a chemical compost). In the case where the water-absorbing culture soil contains other component, the content of the other component is preferably 0.01 to 5% by mass, more preferably about 0.1 to 2% by mass, based on to the mass of the water-absorbing culture soil.

[Composition for water-absorbing culture soils, and method for producing water-absorbing culture soil]

The present invention also includes a composition for water-absorbing culture soils, which comprises the water-repellent organic material, the clay mineral, and the polyvinyl alcohol fibers having an average fiber diameter of 100 $\mu$m or less and an aspect ratio of 30 to 1500, wherein the content of the polyvinyl alcohol fibers is 0.7 to 20 parts by mass per 100 parts by mass of the water-repellent organic material.

The present invention also includes a method for producing a water-absorbing culture soil, comprising the steps of mixing water with the composition for water-absorbing culture soils to produce a mixture and then drying the mixture.

In the composition for water-absorbing culture soils of the present invention, the polyvinyl alcohol fibers can be dispersed in the composition evenly without being distributed unevenly during the mixing with water. Therefore, it is assumed that the polyvinyl alcohol fibers can coat the water-repellent organic material evenly over the entire of the water-absorbing culture soil that is produced by drying and can make it possible to adhere (or coat) the clay mineral to the water-repellent organic material evenly and stably through the polyvinyl alcohol. Therefore, the composition for water-absorbing culture soils of the present invention can retain excellent water absorbability for a long period even when the content of the polyvinyl alcohol fibers is relatively small.

The polyvinyl alcohol fibers having a fibrous form are very fine compared with, for example, a polyvinyl alcohol resin having a granular form, and can be dissolved in water easily. Therefore, the polyvinyl alcohol fibers make it possible to reduce the amount of water in which the polyvinyl alcohol fibers are to be dissolved, have excellent handleability, and also make it possible to reduce the energy required for drying. Furthermore, the polyvinyl alcohol fibers having a fibrous form have higher dispersibility when dissolved in water, can be diffused more easily without forming undissolved lumps of powder in a mixer or the like, and can be dispersed in the composition more evenly compared with, for example, a granular polyvinyl alcohol resin. For these reasons, the water-absorbing culture soil produced using the polyvinyl alcohol fibers can exert a superior water absorbability-retaining capability compared with the case where a granular polyvinyl alcohol resin is used.

The water-repellent organic material, the clay mineral and the polyvinyl alcohol fibers to be contained in the composition for water-absorbing culture soils of the present invention and the contents thereof are the same as those mentioned in the section [Water-absorbing culture soil].

The composition for water-absorbing culture soils of the present invention may additionally contain other component such as a wetting agent (e.g., a polyethylene glycol-type wetting agent) and a fertilizer (e.g., an inorganic fertilizer, an organic fertilizer, a chemical compost), if necessary.

The composition for water-absorbing culture soils of the present invention can be produced by adjusting the contents of the water-repellent organic material, the clay mineral, and the polyvinyl alcohol fibers having an average fiber diameter of 100 $\mu$m or less and having an aspect ratio of 30 to 1500 in such a manner that the content of the polyvinyl alcohol fibers can become 0.7 to 20 parts by mass per 100 parts by mass of the water-repellent organic material and then mixing these components by agitation by a conventional technique such as the use of a mixer or the like. The order of the mixing of the water-repellent organic material, the clay mineral and the polyvinyl alcohol fibers is not particularly limited. It is possible to mix any two of these components, then add the remaining one of these components to the resultant mixture, and then agitate the mixture, or it is also possible to mix the three components in one time. The mixing time is not particularly limited, and may be, for example, 10 seconds to 1 hour, preferably about 30 seconds to 10 minutes. The mixing temperature is not particularly limited, and may be, for example, 5 to 50°C, preferably 20 to 30°C, more preferably room temperature (25°C).

The production of the water-absorbing culture soil may be carried out by agitating the composition for water-absorbing culture soils, then adding water to the mixture and then further agitating the resultant mixture, or may be carried out by firstly adding water to the mixing materials and then agitating the resultant mixture. The amount of water to be added is not particularly limited, and may be such an amount that the polyvinyl alcohol fibers can be mixed homogeneously and the polyvinyl alcohol fibers can be dissolved. For example, the amount may be preferably 10 to 1000 parts by mass, more preferably 50 to 500 parts by mass, still more preferably 50 to 200 parts by mass, per 100 parts by mass of the water-repellent organic material. The agitation (mixing) may be carried out by a conventional technique, such as the mixing and agitation using a mixer or the like. The mixing time and the mixing temperature are not particularly limited, as long as the polyvinyl alcohol fibers can be dispersed evenly in the composition. The mixing time may be, for example, 10 seconds to 1 hour, preferably about 30 seconds to 10 minutes. The mixing temperature may be, for example, 5 to 50°C, preferably 20 to 30°C, more preferably room temperature (25°C).

The drying time and the drying temperature are not particularly limited, and it is preferred to carry out the drying in such a manner that the water content in the obtained water-absorbing culture soil can become preferably 20% by mass or less, more preferably 10% by mass or less, based on the mass of the water-absorbing culture soil. The drying time may be, for example, 1 minute to 24 hours, preferably 10 minutes to 15 hours, more preferably 30 minutes to 10 hours. The drying temperature may be, for example, 20 to 100°C, preferably 40 to 80°C.

The above-mentioned other component may be added to the water-absorbing composition during the process for the production of the water-absorbing culture soil, or may be added to the water-absorbing composition before or after the drying. From the viewpoint of dispersing the other component in the water-absorbing culture soil evenly, it is preferred to add the other component at least before the drying.

In the case where the water-absorbing culture soil of the present invention is a solidified culture soil, the solidified culture soil can be produced by a method comprising the steps of filling the composition for water-absorbing culture soils in a container having a specific shape, then mixing the composition for water-absorbing culture soils with water, and then drying the resultant mixture. This method is the same as the method for the production of the water-absorbing culture soil of the present invention, except that the composition for water-absorbing culture soils is filled in a container having a specific shape. The shape of the container may be selected appropriately depending on the intended use of the water-absorbing culture soil.

By employing the method for the production of the water-absorbing culture soil of the present invention, it becomes possible to easily produce a water-absorbing culture soil which can retain excellent water absorbability even when the content of the polyvinyl alcohol is small.

EXAMPLES

Hereinbelow, the present invention will be described in more detail by way of examples. In the following examples, all "percent (%)" and all "parts" are by mass unless otherwise specified.

The measurement methods and the evaluation methods employed in the following Examples and Comparative Examples are as follows.

<Measurement of desorption ratio after watering>

A 10-mesh woven wire [wire diameter: 0.6 mm, opening size: 1.9 mm, open area: 58% (i.e., the ratio of the areas of open space parts to the sum total of the areas of wire mesh parts and the areas of the open space parts)] that was cut into a size of 120 mm × 120 mm was placed on a 500-cc beaker having an outer diameter of about 90 mm, then a water-absorbing culture soil (5 g) was spread evenly on the woven wire in such a manner that the water-absorbing culture soil could fit inside of an opening of the beaker, then water (200 cc) was poured slowly so as to penetrate throughout the water-absorbing culture soil, and then a filtrate was received by the beaker. Subsequently, floating matters (a water-repellent organic material) in the filtrate were removed, and then precipitates (a clay mineral) in the filtrate were collected by filtration, and then the collected precipitates were dried for 1 hour in a drying machine set to 105°C and were then precisely weighed to measure the amount of the precipitates (also sometimes referred to as "desorbed precipitates", hereinafter). Subsequently, a desorption ratio after watering was calculated in accordance with the following equation (1).

$$\text{Desorption ratio (\% by mass)} = (\text{amount of desorbed precipitates (g)})/5\ \text{g} \times 100 \quad (1)$$

<Water absorption rate>

A 10-mesh woven wire [wire diameter: 0.6 mm, opening size: 1.9 mm, open area: 58% (i.e., the ratio of the areas of open space parts to the sum total of the areas of wire mesh parts and the areas of the open space parts)] that was cut into a size of 120 mm × 120 mm was placed on a 500-cc beaker having an outer diameter of about 90 mm, then a water-absorbing culture soil (5 g) was spread evenly on the woven wire in such a manner that the water-absorbing culture soil could fit inside of an opening of the beaker, then water (3 cc, 3 g) was dripped at a part around the center of the water-absorbing culture soil under the conditions of a temperature of 20°C and a humidity of 65%, and then the time until the water droplets were absorbed was measured. More concretely, the water absorption rate was a time from when water was dripped until when dripped water droplets were lost the drop-like shapes thereof and were spread over the soil. In the case where the water droplets did not form drop-like shapes and were absorbed immediately, the water absorption rate was determined as "0 seconds".

<Amount of absorbed water>

After the measurement of the water absorption rate, the woven wire having the water-absorbing culture soil placed thereon was removed and was then placed on an electronic analytical scale, then the scale mark was adjusted to a zero point, and then the woven wire was placed again on the beaker. Subsequently, water was further dripped evenly on the water-absorbing culture soil at a part at which water had been absorbed in the above-mentioned water absorption rate measurement using a dropper to cause the absorption of the water until excessive water fell in the beaker. Subsequently, the woven wire having the water-absorbing culture soil placed thereon was removed and was then placed on the electronic analytical scale in which the scale mark was adjusted to the zero point to measure a weight (A). The amount of absorbed water was calculated in accordance with the following equation.

$$\text{Amount of absorbed water (g)} = 3 + A$$

<Repeated water absorption test>

After the completion of the evaluation of the water absorption rate and the amount of absorbed water, the woven wire having the water-absorbing culture soil placed thereon was put in a drying machine having a temperature of 20°C, and then the water-absorbing culture soil was dried for 1 day. Subsequently, the water absorption rate and the amount of absorbed water were measured again. A test was carried out by repeating this cycle 20 times (20 rounds) in total.

<Average polymerization degree of polyvinyl alcohol fibers>

The average polymerization degree of polyvinyl alcohol fibers was measured and calculated in accordance with JIS K6726.

<Saponification degree of polyvinyl alcohol fibers>

The saponification degree of polyvinyl alcohol fibers was measured and calculated in accordance with JIS K6726.

<Average fiber diameter of polyvinyl alcohol fibers>

Arbitrary 20 fibers were extracted from polyvinyl alcohol fibers, and then the side surfaces of the fibers were observed with an optical microscope to measure the fiber diameters of the fibers. Subsequently, the fiber diameters were averaged to calculate the average fiber diameter of the polyvinyl alcohol fibers.

<Average fiber length and aspect ratio of polyvinyl alcohol fibers>

The average fiber length of polyvinyl alcohol fibers was measured and calculated in accordance with JIS L1015. The ratio of the average fiber length (L) to the average fiber diameter (D) was calculated as an aspect ratio (an L/D ratio).

[Example 1]

45 parts by mass of volcanic ash (average particle diameter: 1.5 mm) was mixed with 10 parts by mass of polyvinyl alcohol fibers A-1 (average fiber diameter: 14 $\mu$m, aspect ratio (L/D ratio): 71, average polymerization degree: 1750, saponification degree: 88 mol%) which served as a binder for 1 minute using a mortar mixer (5 L) manufactured by MARUI & Co., LTD. Subsequently, 100 parts by mass of peat moss (a Canadian-grown product) was added to the mixture, and the resultant mixture was further agitated for 1 minute to produce a composition for water-absorbing culture soils. Water in an amount of 100 parts by mass (per 100 parts by mass of peat moss) was added to the composition for water-absorbing culture soils, and the resultant mixture was further agitated for 1 minute. The mixture was placed in a tray, was then dried in a drying machine which was adjusted to 40°C for 1 hour, and was then allowed to leave at 20°C for 1 day to produce a water-absorbing culture soil. The desorption ratio after watering of the water-absorbing culture soil was 0.6% by mass. The water absorption rate was 0 seconds, and the amount of absorbed water was 8.2 g.

[Example 2]

A water-absorbing culture soil was produced in the same manner as in Example 1, except that polyvinyl alcohol fibers A-2 produced by altering the L/D ratio of the polyvinyl alcohol (PVA) fibers A-1 to 214 were used as the polyvinyl alcohol fibers. The desorption ratio after watering of the water-absorbing culture soil was 1.2% by mass. The water absorption rate was 0 seconds, and the amount of absorbed water was 8.1 g. In addition, a 20-day repeated water absorption test was carried out. The water absorption rate was 1 second and the amount of absorbed water was 8.0 g after 20 days.

[Example 3]

A water-absorbing culture soil was produced in the same manner as in Example 1, except that polyvinyl alcohol fibers A-2 produced by altering the L/D ratio of the polyvinyl alcohol fibers A-1 to 214 were used as the polyvinyl alcohol fibers and the polyvinyl alcohol fibers A-2 were used in an amount of 2.5 parts by mass. The desorption ratio after watering of the water-absorbing culture soil was 3.2% by mass. The water absorption rate was 0 seconds, and the amount of absorbed water was 8.2 g.

[Example 4]

A water-absorbing culture soil was produced in the same manner as in Example 1, except that polyvinyl alcohol fibers A-3 produced by altering the L/D ratio of the polyvinyl alcohol fibers A-1 to 714 were used as the polyvinyl alcohol fibers. The desorption ratio after watering of the water-absorbing culture soil was 4.6% by mass. The water absorption rate was 0 seconds, and the amount of absorbed water was 8.1 g.

[Example 5]

A water-absorbing culture soil was produced in the same manner as in Example 1, except that polyvinyl alcohol fibers A-4 produced by altering the fiber diameter of the polyvinyl alcohol fibers A-1 to 45 $\mu$m and altering the L/D ratio of the polyvinyl alcohol fibers A-1 to 180 were used as the polyvinyl alcohol fibers. The desorption ratio after watering of the water-absorbing culture soil was 4.8% by mass. The water absorption rate was 0 seconds, and the amount of absorbed water was 7.9 g.

[Example 6]

A water-absorbing culture soil was produced in the same manner as in Example 1, except that polyvinyl alcohol fibers B (average fiber diameter: 14 $\mu$m, aspect ratio (L/D ratio): 214, average polymerization degree: 1750, saponification degree: 96 mol%) were used as the polyvinyl alcohol fibers. The desorption ratio of the water-absorbing culture soil was 1.9% by mass. The water absorption rate was 0 seconds, and the amount of absorbed water was 8.3 g. In addition, a 20-day repeated water absorption test was carried out. The water absorption rate was 1 second and the amount of absorbed water was 8.2 g after 20 days.

[Comparative Example 1]

100 parts by mass of water was added to 100 parts by mass of peat moss (a Canadian-grown product), and the resultant mixture was agitated for 1 minute. The resultant mixture was placed in a tray, was then dried in a drying machine adjusted to 40°C for 1 hour, and was then allowed to leave at 20°C for 1 day to produce a water-absorbing culture soil. The water absorption rate of the water-absorbing culture soil was 325 seconds, and the amount of absorbed water was 5.5 g. In addition, a 20-day repeated water absorption test was carried out. The water absorption rate was 281 seconds and the amount of absorbed water was 5.4 g after 20 days.

[Comparative Example 2]

45 parts by mass of volcanic ash (average particle diameter: 1.5 mm) was mixed with 100 parts by mass of peat moss (a Canadian-grown product) for 1 minute. Subsequently, 100 parts by mass of water was added to the mixture, and the resultant mixture was further agitated for 1 minute. The resultant mixture was placed in a tray, was then dried in a drying machine adjusted to 40°C for 1 hour, and was then allowed to leave at 20°C for 1 day to produce a water-absorbing culture soil. With respect to the water-absorbing culture soil, the desorption ratio was 15.4% by mass, the water absorption rate was 22 seconds, and the amount of absorbed water was 8.0 g. In addition, a 20-day repeated water absorption test was carried out. The water absorption rate was 95 seconds and the amount of absorbed water was 8.3 g after 20 days.

[Comparative Example 3]

A water-absorbing culture soil was produced in the same manner as in Example 1, except that a polyvinyl alcohol resin ("PVA-217" manufactured by Kuraray Co., Ltd.; a granular product) was used in place of the polyvinyl alcohol fibers A-1. The desorption ratio of the water-absorbing culture soil was 12.2% by mass. The water absorption rate was 3 seconds, and the amount of absorbed water was 8.1 g. In addition, a 20-day repeated water absorption test was carried out. The water absorption rate was 6 seconds and the amount of absorbed water was 6.9 g after 20 days.

[Comparative Example 4]

A water-absorbing culture soil was produced in the same manner as in Example 1, except that the content of the polyvinyl alcohol fibers A-1 was altered to 0.5 parts by mass. The desorption ratio of the water-absorbing culture soil was 10.5% by mass. The water absorption rate was 2 seconds, and the amount of absorbed water was 8.1 g.

[Comparative Example 5]

100 parts by mass of peat moss (a Canadian-grown product) was mixed with 0.5 parts by mass of the polyvinyl alcohol fibers A-1 for 1 minute. Subsequently, 100 parts by mass of water was added to the mixture, and the resultant mixture was further agitated for 1 minute. The resultant mixture was placed in a tray, was then dried in a drying machine adjusted to 40°C for 1 hour, and was then allowed to leave at 20°C for 1 day to produce a water-absorbing culture soil. The water absorption rate was 132 seconds, and the amount of absorbed water was 6.8 g.

[Comparative Example 6]

A water-absorbing culture soil was produced in the same manner as in Example 1, except that polyvinyl alcohol fibers A-5 produced by altering the fiber diameter of the polyvinyl alcohol fibers A-1 to 110 $\mu$m and altering the L/D ratio of the polyvinyl alcohol fibers A-1 to 72 were used as the polyvinyl alcohol fibers. The desorption ratio after watering of the water-absorbing culture soil was 11.8% by mass. The water absorption rate was 3 seconds, and the amount of absorbed water was 8.0 g.

[Comparative Example 7]

A water-absorbing culture soil was produced in the same manner as in Example 1, except that polyvinyl alcohol fibers A-6 produced by altering the L/D ratio of the polyvinyl alcohol fibers A-1 to 25 were used as the polyvinyl alcohol fibers. The desorption ratio after watering of the water-absorbing culture soil was 10.3% by mass. The water absorption rate was 2 seconds, and the amount of absorbed water was 8.1 g.

[Comparative Example 8]

A water-absorbing culture soil was produced in the same manner as in Example 1, except that polyvinyl alcohol fibers A-7 produced by altering the L/D ratio of the polyvinyl alcohol fibers A-1 to 1800 were used as the polyvinyl alcohol fibers. The desorption ratio after watering of the water-absorbing culture soil was 13.2% by mass. The water absorption rate was 4 seconds, and the amount of absorbed water was 8.0 g.

All of the polyvinyl alcohol fibers (A-1) to (A-7), the polyvinyl alcohol fibers (B) and the polyvinyl alcohol resin were water-soluble.

In Table 1, the types and amounts of the water-repellent organic materials, the clay minerals and the polyvinyl alcohols (binders) used in Examples 1 to 6 and Comparative Examples 1 to 8, the desorption ratios after watering (% by mass) of the water-absorbing culture soils, and the results of the evaluation of water absorbability of the water-absorbing culture soils are shown. In Table 1, each of the amounts of the clay minerals and the polyvinyl alcohols (binders) added was expressed as a ratio (part(s) by mass) per 100 parts by mass of each of the water-repellent organic materials.

[Table 1]

| | Water-repellent organic material | Clay mineral | | Polyvinyl alcohol (binder) | | | | Desorption ratio after watering (%) | Evaluation of water absorbability | | | |
|---|---|---|---|---|---|---|---|---|---|---|---|---|
| | | | | | | | | | Initial stage | | After repeating for 20 days | |
| | | Type | Amount added (part(s)) | Type | Fiber diameter ($\mu$m) | L/D | Amount added (part(s)) | | Water absorption rate (sec) | Amount of absorbed water (g) | Water absorption rate (sec) | Amount of absorbed water (g) |
| Example 1 | Peat moss | Volcanic ash | 45 | PVA fibers (A-1) | 14 | 71 | 10 | 0.6 | 0 | 8.2 | 1 | 8.0 |
| Example 2 | | | | PVA fibers (A-2) | 14 | 214 | 10 | 1.2 | 0 | 8.1 | 1 | 8.0 |
| Example 3 | | | | PVA fibers (A-2) | 14 | 214 | 2.5 | 3.2 | 0 | 8.2 | 1 | 7.9 |
| Example 4 | | | | PVA fibers (A-3) | 14 | 714 | 10 | 4.6 | 0 | 8.1 | 1 | 7.9 |
| Example 5 | | | | PVA fibers (A-4) | 45 | 180 | 10 | 4.8 | 0 | 7.9 | 1 | 7.7 |
| Example 6 | | | | PVA fibers (B) | 14 | 214 | 10 | 1.9 | 0 | 8.3 | 1 | 8.2 |
| Comparative Example 1 | | - | - | - | - | - | - | - | 325 | 5.5 | 281 | 5.4 |
| Comparative Example 2 | | Volcanic ash | 45 | - | - | - | - | 15.4 | 22 | 8.0 | 95 | 6.3 |
| Comparative Example 3 | | | | PVA resin | - | - | 10 | 12.2 | 3 | 8.1 | 6 | 6.9 |
| Comparative Example 4 | | | | PVA fibers (A-1) | 14 | 71 | 0.5 | 10.5 | 2 | 8.1 | - | - |

(continued)

| | Water-repellent organic material | Clay mineral | | Polyvinyl alcohol (binder) | | | | Desorption ratio after watering (%) | Evaluation of water absorbability | | | |
|---|---|---|---|---|---|---|---|---|---|---|---|---|
| | | | | | | | | | Initial stage | | After repeating for 20 days | |
| | | Type | Amount added (part(s)) | Type | Fiber diameter (μm) | L/D | Amount added (part(s)) | | Water absorption rate (sec) | Amount of absorbed water (g) | Water absorption rate (sec) | Amount of absorbed water (g) |
| Comparative Example 5 | | - | - | PVA fibers (A-1) | 14 | 71 | 0.5 | - | 132 | 6.8 | - | - |
| Comparative Example 6 | | Volcanic ash | 45 | PVA fibers (A-5) | 110 | 72 | 10 | 11.8 | 3 | 8.0 | - | - |
| Comparative Example 7 | | | | PVA fibers (A-6) | 14 | 25 | 10 | 10.3 | 2 | 8.1 | - | - |
| Comparative Example 8 | | | | PVA fibers (A-7) | 14 | 1800 | 10 | 13.2 | 4 | 8.0 | - | - |

EP 3 821 701 A1

13

As shown in Table 1, with respect to each of the water-absorbing culture soils produced in Examples 1 to 6, the desorption ratio after watering was 10% by mass or less and it was demonstrated that the result of the evaluation of water absorbability was good. In addition, it was also demonstrated that each of the water-absorbing culture soils produced in Examples 1 to 6 could retain excellent water absorbability even after watering was applied repeatedly for 20 days. In contrast, with respect to the water-absorbing culture soils produced in Comparative Examples 1 to 8, it was demonstrated that the results of the evaluation of water absorbability were unsatisfactory, and that, from the results for Comparative Examples 2 and 3, water absorbability was deteriorated after watering was applied repeatedly in the case where only a clay mineral was used and the case where a polyvinyl alcohol resin (a granular product) was used.

**Claims**

1. A water-absorbing culture soil comprising a water-repellent organic material, a clay mineral and a polyvinyl alcohol, wherein at least a part of the clay mineral is adhered to the water-repellent organic material through the polyvinyl alcohol, and
the desorption ratio after watering is 10% by mass or less.

2. The water-absorbing culture soil according to claim 1, wherein the content of the polyvinyl alcohol is 0.7 to 20 parts by mass per 100 parts by mass of the water-repellent organic material.

3. The water-absorbing culture soil according to claim 1 or 2, wherein the content of the clay mineral is 10 to 100 parts by mass per 100 parts by mass of the water-repellent organic material.

4. The water-absorbing culture soil according to any one of claims 1 to 3, wherein the water-absorbing culture soil is a shaped article that is shaped into a specified shape.

5. A composition for water-absorbing culture soils, comprising a water-repellent organic material, a clay mineral, and polyvinyl alcohol fibers having an average fiber diameter of 100 $\mu$m or less and having an aspect ratio of 30 to 1500, wherein the content of the polyvinyl alcohol fibers is 0.7 to 20 parts by mass per 100 parts by mass of the water-repellent organic material.

6. A method for producing a water-absorbing culture soil, comprising the steps of:

   mixing water with a composition for water-absorbing culture soils as recited in claim 5 to produce a mixture; and
   drying the mixture.

7. A method for producing a water-absorbing culture soil, comprising the steps of:

   filling a composition for water-absorbing culture soils as recited in claim 5 into a container having a specified shape;
   mixing water with the composition to produce a mixture; and
   drying the mixture.

## INTERNATIONAL SEARCH REPORT

| | International application No. |
|---|---|
| | PCT/JP2019/027542 |

**A.    CLASSIFICATION OF SUBJECT MATTER**
Int.Cl.  A01G24/15(2018.01)i, A01G24/20(2018.01)i, A01G24/30(2018.01)i

According to International Patent Classification (IPC) or to both national classification and IPC

**B.    FIELDS SEARCHED**

Minimum documentation searched (classification system followed by classification symbols)
Int.Cl.  A01G24/15, A01G24/20, A01G24/30

Documentation searched other than minimum documentation to the extent that such documents are included in the fields searched
Published examined utility model applications of Japan         1922–1996
Published unexamined utility model applications of Japan        1971–2019
Registered utility model specifications of Japan             1996–2019
Published registered utility model applications of Japan       1994–2019

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X<br>Y | JP 4-169127 A (NIHON HIRYO CO., LTD.) 17 June 1992, claims, page 2, upper right column, line 12 to page 3, upper left column, line 13 (Family: none) | 1-4<br>6-7 |
| X<br>Y | JP 4865196 B2 (OKUTAMA KOGYO CO., LTD.) 01 February 2012, paragraphs [0008]-[0010] (Family: none) | 1-4<br>6-7 |
| X<br>Y | JP 2001-346438 A (KURARAY CO., LTD.) 18 December 2001, paragraphs [0008]-[0011] (Family: none) | 5<br>6-7 |

☒    Further documents are listed in the continuation of Box C.        ☐    See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 October 2019 (03.10.2019) | 15 October 2019 (15.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2019/027542

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2008-253184 A (OKUTAMA KOGYO CO., LTD.) 23 October 2008, paragraph [0016] (Family: none) | 1-7 |
| A | JP 10-191780 A (KUREHA CHEM IND CO., LTD.) 28 July 1998, paragraph [0013] (Family: none) | 1-7 |

Form PCT/ISA/210 (continuation of second sheet) (January 2015)

**REFERENCES CITED IN THE DESCRIPTION**

**Patent documents cited in the description**

- JP 2005341898 A
- JP 7042019 A